# EUROPEAN PATENT APPLICATION

(11) **EP 4 345 956 A1**
(43) Date of publication of application: **03.04.2024**
(21) Application number: 23191893.9
(22) Date of filing: 17.08.2023
(51) Int. Cl.: H01M 8/04007, H01M 8/04082, H01M 8/0637, H01M 8/12

(54) **WING TANK VAPORIZER FOR SOLID OXIDE FUEL CELL ON UNMANNED AIRCRAFT**

(30) Priority: 15.09.2022 US 202217932424
(71) Applicant: Lockheed Martin Corporation, Bethesda, Maryland 20817-1877 (US)
(72) Inventor: GAMBLE, Dustin Eli, San Luis Obispo, 93401 (US)
(74) Representative: Barker Brettell LLP

(57) **Abstract**

In one embodiment, systems and methods include using an evaporator coil with a solid oxide fuel cell generator to generate energy for an aircraft vehicle. The system comprises a solid oxide fuel cell generator operable to generate energy. The system further comprises a first tank fluidly coupled to the solid oxide fuel cell generator configured to discharge a fluid to the solid oxide fuel cell generator and to receive the fluid from an evaporator coil coupled to the solid oxide fuel cell generator. The system further comprises a second tank fluidly coupled to the first tank and having a volume of the fluid, wherein the second tank is configured to discharge the fluid to the first tank, wherein the evaporator coil receives the discharged fluid from the second tank and increases the temperature of the discharged fluid prior to the first tank receiving the discharged fluid.

## Description

### TECHNICAL FIELD

This disclosure generally relates to unmanned aircraft, and more specifically to a wing tank vaporizer for a solid oxide fuel cell on an unmanned aircraft.

### BACKGROUND

Traditionally, internal combustion engines have been used to power aircraft. Batteries and alternate power sources or generators can present a lower cost, less maintenance, and lower system mass if used to power aircraft. For example, a solid oxide fuel cell generator may be used to power an aircraft using a fuel stored in a tank. However, problems related to fluid flow and maintenance may occur.

### BRIEF DESCRIPTION OF THE DRAWINGS

To assist in understanding the present disclosure, reference is now made to the following description taken in conjunction with the accompanying drawings, in which:
FIG. 1 illustrates an example vehicle, according to certain embodiments;
FIG. 2 illustrates an example fuel system for the example vehicle in FIG. 1, according to certain embodiments; and
FIG. 3 illustrates a transparent view of the example vehicle in FIG. 1 with the example fuel system of FIG. 2, according to certain embodiments.

### DETAILED DESCRIPTION

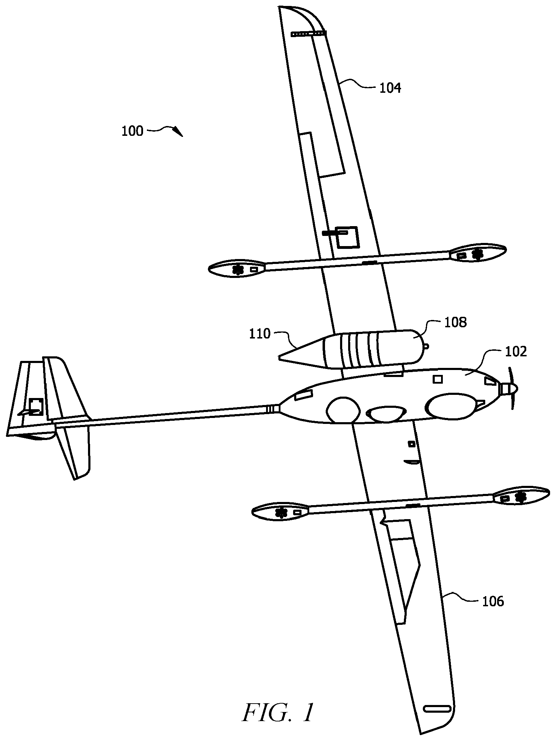

To facilitate a better understanding of the present disclosure, the following examples of certain embodiments are given. The following examples are not to be read to limit or define the scope of the disclosure. Embodiments of the present disclosure and its advantages are best understood by referring to FIGs. 1 through 3, where like numbers are used to indicate like and corresponding parts. Described herein are various systems and methods that provide utilization of one or more batteries to power and structurally support an aircraft.

FIG. 1 illustrates an example vehicle 100. Vehicle 100 may be any suitable vessel configured for transportation, such as an aircraft. Vehicle 100 may include a body 102 (for example, a fuselage), a first wing 104, and a second wing 106. As illustrated, both the first wing 104 and the second wing 106 may be coupled to the body 102, wherein the first wing 104 may be disposed opposite to the second wing 106. The vehicle 100 may be any suitable size, height, shape, and any combinations thereof. In embodiments, the body 102 may be cylindrical, and the first wing 104 and the second wing 106 may generally be rectangular. As shown, the vehicle 100 may further comprise a first tank 108.

The first tank 108 may be operable to house or contain a fuel to be used to power the vehicle 100. Without limitations, the first tank 108 may be operable to contain any suitable volume of fuel, such as about 8.6 liters. In embodiments, the fuel may be any suitable fluid for producing energy, such as propane. For example, the first tank 108 may be fluidly connected to the body 102 and operable to direct the fuel to the body 102 to be consumed to produce energy. As illustrated, the first tank 108 may be disposed along the first wing 104. In one or more embodiments, the first tank 108 may alternatively be disposed along the second wing 106 rather than the first wing 104. Without limitations, the first tank 108 may be secured to the first wing 104 or second wing 106 through any suitable method, including through the usage of fasteners, welding, adhesives, interlocking components, interference fit, and any combination thereof. In embodiments, suitable fasteners may include studs, bolts, nuts, washers, screws, nails, rivets, brackets, clamps, and the like.

The first tank 108 may be offset from the body 102 by a suitable distance. The first tank 108 may be any suitable size, height, shape, and any combinations thereof. With reference to FIG. 1, the first tank 108 may be generally in a cylindrical shape. In embodiments, the first tank 108 may comprise any suitable materials, including, but not limited to, metals, nonmetals, polymers, ceramics, composites, and any combinations thereof. Without limitations, the first tank 108 may comprise carbon fiber material. The first tank 108 may comprise a tail cone 110 disposed at a distal end of the first tank 108 configured to improve the aerodynamics of the air flow around first tank 108 as the vehicle 100 is in flight.

While the example of vehicle 100 will be used throughout this disclosure as an example application of the methods and systems described herein, any suitable apparatus or structure onto which the first tank 108 and fuel system (discussed further below) may be incorporated into is also contemplated in this disclosure. For example, vehicle 100 may be any type of vehicle, including an aircraft, a landcraft, a watercraft, a train, a hovercraft, and a helicopter.

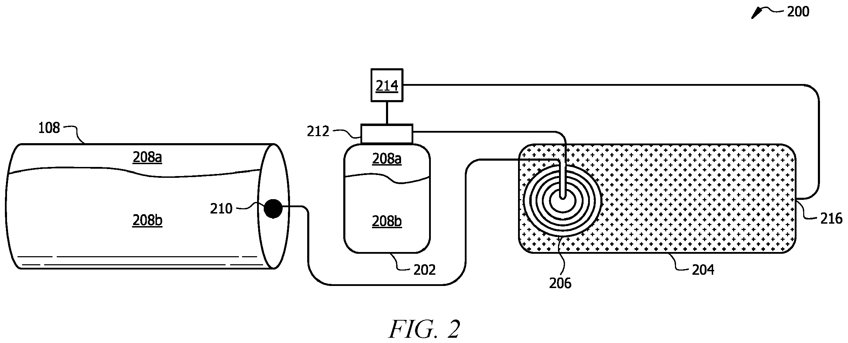

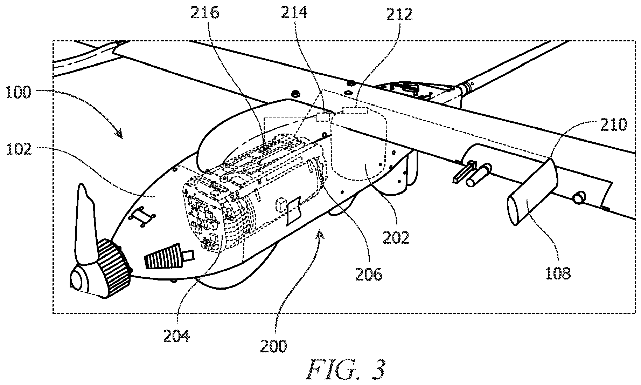

FIGs. 2-3 illustrate an example fuel system 200 for the vehicle 100 (referring to FIG. 1). FIG. 2 illustrates the example fuel system 200, and FIG. 3 illustrates the fuel system 100 incorporated into the vehicle 100. As illustrated, the fuel system 200 may comprise the first tank 108, a second tank 202, a solid oxide fuel cell generator 204, and an evaporator coil 206. As previously discussed, the first tank 108 may be operable to contain a fuel, wherein the fuel may be a mixture partly comprising a gaseous state 208a and a liquid state 208b. The first tank 108 may be utilized as a reserve source of fuel for providing power to the vehicle 100. For example, the fuel contained within first tank 108 may be consumed by the solid oxide fuel cell generator 204 to produce energy to power the vehicle 100.

The first tank 108 may be fluidly coupled to the second tank 202, wherein the second tank 202 may be fluidly coupled to the solid oxide fuel cell generator 204. As best seen in FIG. 3, the second tank 202 and the solid oxide fuel cell generator 204 may be disposed within the body 102 of the vehicle 100. The first tank 108 may be configured to discharge the fuel through an outlet 210 to be directed towards the second tank 202, wherein the second tank 202 then discharges fuel to the solid oxide fuel cell generator 204. Prior to the second tank 202 receiving the discharged fuel from the first tank 108, the discharged fuel may pass through the evaporator coil 206.

The evaporator coil 206 may be incorporated with, secured to, or coupled to the solid oxide fuel cell generator 204. The evaporator coil 206 may be disposed at an end, on top of, at a side of, below, or any combination thereof in relation to the solid oxide fuel cell generator 204. Without limitations, the evaporator coil 206 may be secured to the solid oxide fuel cell generator 204 through any suitable method, including through the usage of fasteners, welding, adhesives, interlocking components, interference fit, and any combination thereof. In embodiments, suitable fasteners may include studs, bolts, nuts, washers, screws, nails, rivets, brackets, clamps, and the like. In one or more embodiments, the evaporator coil 206 may be disposed at an end of the solid oxide fuel cell generator 204.

In one example embodiment, a cathode blower assembly disposed at an end of the solid oxide fuel cell generator 204 may be removed. The evaporator coil 206 may be disposed against the exposed end of the solid oxide fuel cell generator 204, wherein an end plate may secure the evaporator coil 206 to the end of the solid oxide fuel cell generator 204. Once the evaporator coil 206 and end plate are aligned with the end of the solid oxide fuel cell generator 204, the cathode blower assembly may be re-attached to the solid oxide fuel cell generator 204, thereby incorporating the evaporator coil 206 into an end of the solid oxide fuel cell generator 204. Without limitations, there may be one or more spacers or standoffs used to compress the evaporator coil 206 to the end plate and to the end of the solid oxide fuel cell generator 204. In embodiments, the evaporator coil 206 may be any suitable size, height, shape, and any combinations thereof. In further embodiments, the evaporator coil 206 may comprise any suitable materials, including, but not limited to, metals, nonmetals, polymers, ceramics, composites, and any combinations thereof. Without limitations, the evaporator coil 206 may comprise aluminum.

The evaporator coil 206 may operate as a heat exchanger and may be configured to transfer heat from the solid oxide fuel cell generator 204 to the received fuel discharged by the first tank 108. In embodiments, the solid oxide fuel cell generator 204 may operate at high temperatures. For example, the solid oxide fuel cell generator 204 may have a core temperature of about 800°C and an outer temperature of about 100°C. As the temperature of the received fuel may be lower than the operating temperatures of the solid oxide fuel cell generator 204, heat transfer may occur to increase the temperature of the received fuel via the evaporator coil 206. During operations, the increase in temperature may cause a phase change in the fuel. For example, the evaporator coil 206 may receive the fuel as a liquid. As the temperature of the fuel increases due to the heat transfer, the fuel may transition to a gaseous state.

The fuel having an increased temperature due to the heat transfer through the evaporator coil 206 may be discharged from the evaporator coil 206 and flow into the second tank 202. Similar to the first tank 108, the second tank 202 may be operable to house or contain fuel to be used to power the vehicle 100, wherein the fuel is a mixture partly comprising the gaseous state 208a and the liquid state 208b. Without limitations, the second tank 202 may contain any suitable volume of fuel, such as about 2.2 liters. The second tank 202 may be any suitable size, height, shape, and any combinations thereof. In further embodiments, the second tank 202 may comprise any suitable materials, including, but not limited to, metals, nonmetals, polymers, ceramics, composites, and any combinations thereof. In one or more embodiments, there may be a manifold 212 secured to the opening of second tank 202, wherein the opening may function as both an inlet and outlet. The manifold 212 may be any suitable pipe fitting operable to provide one or more connections to other components in fuel system 200.

The second tank 202 may receive the fuel having an increased temperature discharged from the evaporator coil 206 in a gaseous state. Receiving the fuel in a gaseous state may prevent the second tank 202 from overfilling with fuel, as the second tank 202 initially contains a mixture of fuel partly in the liquid state 208b. During operations, the second tank 202 may discharge fuel to be directed to the solid oxide fuel cell generator 204, wherein the discharged fuel is the gas portion of the mixture. The discharged fuel may flow out the second tank 202 through the manifold 212. The fuel system 200 may further comprise a regulator 214 disposed downstream of the second tank 202 and operable to decrease a pressure of the fuel discharged from the second tank 202. The regulator 214 may be any suitable pressure-relief device operable to lower the pressure of a fluid flowing therethrough. The regulator 214 may be coupled to the manifold 214, incorporated into the manifold, or disposed at a distance downstream from the manifold 214. In prior embodiments wherein the fuel received by the regulator 214 was in the liquid state 208b, the regulator 214 would freeze and fail. The present disclosure provides for the fuel to be vaporized wherein the fuel received by the regulator 214 may be in the gaseous state 208a, thereby allowing continuous functionality of the regulator 214. After the pressure reduction of the fuel by the regulator 214, the fuel may be received by the solid oxide fuel cell generator 204 through an inlet 216.

The solid oxide fuel cell generator 204 may be configured to generate energy by oxidizing the received fuel. The solid oxide fuel cell generator 204 may be any suitable size, height, shape, and any combinations thereof. In further embodiments, the se solid oxide fuel cell generator 204 may comprise any suitable materials, including, but not limited to, metals, nonmetals, polymers, ceramics, composites, and any combinations thereof. The solid oxide fuel cell generator 204 may be any suitable electrochemical conversion device. In embodiments, the solid oxide fuel cell generator 204 may comprise a solid oxide or ceramic electrolyte to conduct negative oxygen ions from a cathode to an anode. The solid oxide fuel cell generator 204 may comprise a planar fuel cell design, tubular design, modified planar cell design, or any combination thereof. In one or more embodiments, the generated energy may be utilized in operating the vehicle 100.

While the example of fuel system 200 used throughout this disclosure describes specific components, such as the first tank 108, second tank 202, solid oxide fuel cell generator 204, evaporator coil 206, manifold 212, and regulator 214, any additional suitable apparatus or structure may be incorporated into the fuel system 200. For example, fuel system 200 may further comprise any suitable piping, fittings, conduit, valves, pumps, sensors, circuitry, and the like.

The present disclosure may provide numerous advantages, such as the various technical advantages that have been described with respective to various embodiments and examples disclosed herein. Other technical advantages will be readily apparent to one skilled in the art from the following figures, descriptions, and claims. Moreover, while specific advantages have been enumerated in this disclosure, various embodiments may include all, some, or none of the enumerated advantages.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.
The following clauses define further aspects of the invention:
1. A system for generating energy, comprising:
   a solid oxide fuel cell generator operable to generate energy by oxidizing a received fluid;
   a first tank fluidly coupled to the solid oxide fuel cell generator and configured to:
      discharge a fluid to the solid oxide fuel cell generator, wherein the fluid is in a gaseous state; and
      receive the fluid from an evaporator coil coupled to the solid oxide fuel cell generator; and
   a second tank fluidly coupled to the first tank and having a volume of the fluid, wherein the second tank is configured to discharge the fluid to the first tank, wherein the evaporator coil receives the discharged fluid from the second tank and increases the temperature of the discharged fluid prior to the first tank receiving the discharged fluid.
2. The system of 1, further comprising a manifold coupled to the first tank.
3. The system of 2, further comprising a regulator disposed downstream of the manifold and operable to decrease a pressure of the fluid discharged from the first tank.
4. The system of 1, further comprising an aircraft vehicle, comprising:
   a body;
   a first wing coupled to the body; and
   a second wing coupled to the body and disposed opposite to the first wing.
5. The system of 4, wherein the solid oxide fuel cell generator and the first tank are each disposed within the body.
6. The system of 4, wherein the second tank is coupled to the first wing or the second wing.
7. The system of 6, further comprising a tail cone coupled to the second tank, and wherein the second tank comprises carbon fiber material.
8. A method of operating an aircraft vehicle, comprising:
   receiving, by a first tank, a fluid flow discharged from a second tank, wherein a temperature of the discharged fluid flow is increased by flowing the discharged fluid through an evaporator coil disposed between the first tank and the second tank;
   directing the received fluid flow from the first tank to a solid oxide fuel cell generator;
   generating energy, via the solid oxide fuel cell generator, by oxidizing the received fluid flow; and
   operating the aircraft vehicle based on the generated energy.
9. The method of 8, further comprising decreasing a pressure of the received fluid via a regulator disposed between the first tank and the solid oxide fuel cell generator.
10. The method of 8, wherein the evaporator coil is coupled to the solid oxide fuel cell generator.
11. The method of 8, wherein the aircraft vehicle comprises:
   a body;
   a first wing coupled to the body; and
   a second wing coupled to the body and disposed opposite to the first wing.
12. The method of 11, wherein the solid oxide fuel cell generator and the first tank are each disposed within the body.
13. The method of 11, wherein the second tank is coupled to the first wing or the second wing.
14. An aircraft vehicle, comprising:
   a body configured to house a solid oxide fuel cell generator and a first tank, wherein the first tank is fluidly coupled to the solid oxide fuel cell generator;
   a first wing coupled to the body;
   a second wing coupled to the body and disposed opposite to the first wing; and
   a second tank coupled to the first wing or the second wing.
15. The aircraft vehicle of 14, further comprising a manifold coupled to the first tank.
16. The aircraft vehicle of 15, further comprising a regulator disposed downstream of the manifold and operable to decrease a pressure of the fluid discharged from the first tank.
17. The aircraft vehicle of 14, further comprising a tail cone coupled to the second tank, and wherein the second tank comprises carbon fiber material.
18. The aircraft vehicle of 14, further comprising an evaporator coil coupled to the solid oxide fuel cell generator, wherein the evaporator coil is configured to increase a temperature of a fluid.
19. The aircraft vehicle of 18, wherein the first tank is configured to:
   discharge the fluid to the solid oxide fuel cell generator, wherein the fluid is in a gaseous state; and
   receive the fluid from the evaporator coil.
20. The aircraft vehicle of 18, wherein the evaporator coil is configured to:
   receive the fluid from the second tank; and
   discharge the fluid to the first tank at an increased temperature.

## Claims

1. A system for generating energy, comprising:
a solid oxide fuel cell generator operable to generate energy by oxidizing a received fluid;
a first tank fluidly coupled to the solid oxide fuel cell generator and configured to:
discharge a fluid to the solid oxide fuel cell generator, wherein the fluid is in a gaseous state; and
receive the fluid from an evaporator coil coupled to the solid oxide fuel cell generator; and
a second tank fluidly coupled to the first tank and having a volume of the fluid, wherein the second tank is configured to discharge the fluid to the first tank, wherein the evaporator coil receives the discharged fluid from the second tank and increases the temperature of the discharged fluid prior to the first tank receiving the discharged fluid.

2. The system of claim 1, further comprising a manifold coupled to the first tank.

3. The system of claim 2, further comprising a regulator disposed downstream of the manifold and operable to decrease a pressure of the fluid discharged from the first tank.

4. The system of any preceding claim, further comprising an aircraft vehicle, comprising:
a body;
a first wing coupled to the body; and
a second wing coupled to the body and disposed opposite to the first wing.

5. The system of claim 4, wherein the solid oxide fuel cell generator and the first tank are each disposed within the body.

6. The system of claim 4 or claim 5, wherein the second tank is coupled to the first wing or the second wing, preferably further comprising a tail cone coupled to the second tank, and wherein the second tank comprises carbon fiber material.

7. A method of operating an aircraft vehicle, comprising:
receiving, by a first tank, a fluid flow discharged from a second tank, wherein a temperature of the discharged fluid flow is increased by flowing the discharged fluid through an evaporator coil disposed between the first tank and the second tank;
directing the received fluid flow from the first tank to a solid oxide fuel cell generator;
generating energy, via the solid oxide fuel cell generator, by oxidizing the received fluid flow; and
operating the aircraft vehicle based on the generated energy.

8. The method of claim 7, further comprising decreasing a pressure of the received fluid via a regulator disposed between the first tank and the solid oxide fuel cell generator.

9. The method of claim 7, wherein the evaporator coil is coupled to the solid oxide fuel cell generator.

10. The method of claim 7, wherein the aircraft vehicle comprises:
a body;
a first wing coupled to the body; and
a second wing coupled to the body and disposed opposite to the first wing.

11. The method of claim 10, wherein the solid oxide fuel cell generator and the first tank are each disposed within the body, and/or wherein the second tank is coupled to the first wing or the second wing.

12. An aircraft vehicle, comprising:
a body configured to house a solid oxide fuel cell generator and a first tank, wherein the first tank is fluidly coupled to the solid oxide fuel cell generator;
a first wing coupled to the body;
a second wing coupled to the body and disposed opposite to the first wing; and
a second tank coupled to the first wing or the second wing.

13. The aircraft vehicle of claim 12, further comprising a manifold coupled to the first tank, preferably further comprising a regulator disposed downstream of the manifold and operable to decrease a pressure of the fluid discharged from the first tank.

14. The aircraft vehicle of claim 12, further comprising a tail cone coupled to the second tank, and wherein the second tank comprises carbon fiber material, and/or further comprising an evaporator coil coupled to the solid oxide fuel cell generator, wherein the evaporator coil is configured to increase a temperature of a fluid.

15. The aircraft vehicle of claim 14, wherein the first tank is configured to:
discharge the fluid to the solid oxide fuel cell generator, wherein the fluid is in a gaseous state; and
receive the fluid from the evaporator coil and/or, wherein the evaporator coil is configured to:
receive the fluid from the second tank; and
discharge the fluid to the first tank at an increased temperature.
